# FASCICULE DE BREVET EUROPEEN

(11) **EP 4 042 407 B1**
(45) Date de publication et mention de la délivrance du brevet: **04.12.2024**
(21) Numéro de dépôt: 20793028.0
(22) Date de dépôt: 30.09.2020
(51) Int. Cl.: G10K 11/168, G10K 11/172

(54) **PANNEAU D'ATTÉNUATION ACOUSTIQUE POUR ONDE BASSES FRÉQUENCES**
AKUSTISCHE DÄMPFUNGSPLATTE FÜR NIEDERFREQUENZWELLEN
ACOUSTIC ATTENUATION PANEL FOR LOW-FREQUENCY WAVES

(30) Priorité: 08.10.2019 FR 1911130
(43) Date de publication de la demande: 17.08.2022
(73) Titulaire: Safran Nacelles, 76700 Gonfreville l'Orcher (FR)
(72) Inventeur: VERSAEVEL, Marc, 77550 Moissy Cramayel (FR); DESJOYEAUX, Bertrand, 77550 Moissy Cramayel (FR); PREAU, Mathieu, 77550 Moissy Cramayel (FR)
(74) Mandataire: Germain Maureau
(86) Numéro de dépôt international: PCT/FR2020/051712
(87) Numéro de publication internationale: WO 2021/069813

(56) Documents cités:
- US-A- 3 910 374
- US-A- 3 910 374
- US-A- 4 084 367
- US-A- 4 084 367
- US-A- 4 265 955
- US-A- 4 265 955
- US-A1- 2014 090 923
- US-A1- 2014 090 923
- US-B1- 6 509 081
- US-B1- 6 509 081

## Description

### Domaine Technique

La présente invention se rapporte à un panneau d'atténuation acoustique pour le traitement d'ondes basses fréquences.

Le panneau d'atténuation acoustique selon l'invention trouve une application particulièrement intéressante dans le domaine de l'aéronautique, en particulier pour son utilisation dans les ensembles propulsifs d'avions.

### Technique antérieure

Un avion est propulsé par un ou plusieurs ensembles propulsifs comprenant chacun un turboréacteur/turbopropulseur logé dans une nacelle tubulaire. Chaque ensemble propulsif est rattaché à l'avion par un mât situé généralement sous une aile ou au niveau du fuselage.

Une nacelle présente généralement une structure comprenant une section amont formant une entrée d'air en amont du turboréacteur, une section médiane destinée à entourer une soufflante du turboréacteur, une section avale pouvant abriter des moyens d'inversion de poussée et destinée à entourer la chambre de combustion du turboréacteur, et est généralement terminée par une tuyère d'éjection dont la sortie est située en aval du turboréacteur.

L'entrée d'air sert à optimiser la captation d'air nécessaire à l'alimentation de la soufflante du turboréacteur dans toute l'enveloppe de vol et à canaliser l'air vers la soufflante.

L'entrée d'air comprend principalement une lèvre d'entrée d'air formant un bord d'attaque, rapportée sur une structure annulaire.

La structure annulaire comprend un carénage externe assurant la continuité aérodynamique externe de la nacelle et un carénage interne assurant la continuité aérodynamique interne de la nacelle, notamment avec le carter externe de soufflante au niveau de la section médiane. La lèvre d'entrée d'air assure en amont la jonction entre ces deux carénages.

Le carénage interne de l'entrée d'air est exposé à un flux d'air important et est situé à proximité des pâles de la soufflante. Il contribue de ce fait à la transmission du bruit provenant du turboréacteur vers l'extérieur de l'aéronef.

Aussi, il est connu de l'art antérieur d'équiper le carénage interne de l'entrée d'air de la nacelle d'un panneau acoustique en vue d'atténuer la transmission du bruit généré par le turboréacteur.

Typiquement, le panneau acoustique comporte une peau acoustique perforée et une âme alvéolaire qui est assemblée sur la peau acoustique.

L'âme alvéolaire comporte une pluralité de cellules acoustiques, formant des résonateurs de Helmholtz, qui sont séparées entre elles par des cloisons périphériques.

La peau perforée est tournée vers la zone d'émission de bruit, de sorte que les ondes acoustiques peuvent pénétrer par les ouvertures de la peau perforée à l'intérieur des cellules acoustiques. L'énergie acoustique est dissipée par effet visco-thermique dans les cellules acoustiques.

On connaît en particulier, des panneaux acoustiques dont l'âme alvéolaire comporte deux étages de cellules acoustique. Ces deux étages de cellules sont séparés l'un de l'autre par un septum micro-perforé.

La présence d'un étage de cellules acoustiques supplémentaire permet d'améliorer les performances acoustiques du panneau.

Ces dernières années, les développements d'ensembles propulsifs se sont dirigés vers une recherche de réduction de la consommation des avions. Pour répondre à ce besoin, l'évolution globale des avions, en particulier commerciaux, tend à fournir des ensembles propulsifs présentant des dimensions de turboréacteurs plus importantes avec des soufflantes de plus grand diamètre. On cherche également à fournir des nacelles plus courtes et plus légères de manière à réduire la génération de traînée en phase de vol. L'effet global résultant en une baisse de la consommation en carburant.

La soufflante présentant de plus grandes dimensions, sa vitesse de rotation diminue et elle génère alors une sonorité de plus basse fréquence. Or les panneaux acoustiques de l'art antérieur, qui présentent des résultats de traitement acoustique optimum dans les moyennes ou hautes fréquences, ne sont pas adaptés aux traitements acoustiques des basses fréquences.

Il existe donc un besoin de fournir des panneaux acoustiques adaptés à ces nouveaux ensembles propulsifs de manière à fournir un traitement acoustique adéquat.

Il est connu du domaine public que la hauteur des cellules permet de régler la fréquence à laquelle le traitement acoustique est efficace.

Une augmentation des dimensions des cellules permet en outre un traitement acoustiques dans les basses fréquences.

Une adaptation des panneaux de l'art antérieur consisterait en outre en une augmentation de la hauteur de cellules de ces panneaux. Une hauteur totale cible du panneau a, par ailleurs, été évaluée à au moins 50 mm pour permettre un traitement acoustique basse fréquence adéquat.

Or, l'encombrement disponible dans les futurs ensembles propulsifs aux nacelles courtes ne permet pas d'intégrer des panneaux acoustiques aux dimensions excessives.

Il existe donc un besoin de fournir un panneau acoustique qui soit apte à traiter les émissions sonores générées par ces nouveaux ensembles propulsifs tout en présentant un encombrement minimal. En particulier il existe un besoin de fournir un panneau d'atténuation acoustique présentant un encombrement minimum qui soit apte à fournir un traitement acoustique équivalent à des panneaux présentant une hauteur totale de l'ordre de 50 mm.

On connaît de l'art antérieur, notamment des demandes WO2015023389 et GB2300081 des traitements basses fréquences à faible encombrement qui consiste à ajouter dans chaque cellule des obstacles coniques dont le sommet possède un orifice.

Cependant ce type de géométrie est difficilement réalisable à échelle industrielle. On connaît également de l'art antérieur les documents US3910374 et US4265955 qui décrivent des panneaux acoustiques.

Il existe donc un besoin de fournir un panneau acoustique adapté au traitement acoustique de basse fréquence qui soit facilement réalisable à échelle industrielle.

### Exposé de l'invention

L'invention a notamment pour but de pallier au moins l'un de ces inconvénients et concerne selon un premier aspect un panneau d'atténuation acoustique selon la revendication 1.

Par macro-perforation on entend des perforations dont le diamètre est supérieur ou égal à 1 mm.

Selon d'autres caractéristiques de l'invention, le panneau d'atténuation acoustique de l'invention comporte l'une ou plusieurs des caractéristiques optionnelles suivantes considérées seules ou selon toutes les combinaisons possibles.

Selon une variante de réalisation, chaque perforation du septum présente un diamètre compris entre 1 mm et de 2 mm.

Selon une variante de réalisation, chaque cellule acoustique de la première structure alvéolaire présente une hauteur comprise entre 5 mm et 10 mm.

Selon une variante de réalisation, chaque cellule acoustique de la deuxième structure alvéolaire présente une hauteur comprise entre 10 mm et 20 mm.

Selon une variante de réalisation, la hauteur des cellules acoustiques de la première structure alvéolaire est inférieure à la hauteur des cellules acoustiques de la deuxième structure alvéolaire.

Selon une variante de réalisation, la hauteur des cellules acoustiques de la première structure alvéolaire est égale à la hauteur des cellules acoustiques de la deuxième structure alvéolaire.

Selon une variante de réalisation, la hauteur totale le panneau acoustique présente une hauteur totale inférieure à 30 mm.

Selon l'invention, les macro-perforations sont réparties régulièrement dans le septum de sorte que trois macro-perforations adjacentes forment un triangle équilatéral dont un côté est égal au diamètre des cellules acoustiques des structures alvéolaires et une hauteur est égale à 0.86 fois le diamètre des cellules acoustiques des structures alvéolaires +/-20%.

Selon une variante de réalisation, la première structure alvéolaire est superposée sur la deuxième structure alvéolaire de sorte que les cloisons périphériques des cellules de la première structure alvéolaire sont agencées dans la continuité géométrique des cloisons périphériques des cellules de la deuxième structure alvéolaire.

Selon une variante de réalisation, chaque cellule de la première structure alvéolaire et chaque cellule de la deuxième structure alvéolaire est centrée par rapport à la perforation unique du septum.

Selon un deuxième aspect, l'invention se rapporte à une nacelle dans laquelle est disposée une soufflante, la nacelle comprenant une entrée d'air comportant une face intérieure orientée en regard de la soufflante, ladite face intérieure recevant au moins un panneau d'atténuation acoustique tel que précédemment décrit.

Selon une variante, la nacelle comprend une entrée d'air, un inverseur de poussée et une tuyère d'éjection dans laquelle au moins l'un des composants choisi dans le groupe comprenant l'entrée d'air, l'inverseur de poussée et la tuyère d'éjection reçoit un panneau d'atténuation acoustique tel que précédemment décrit.

D'autres caractéristiques et avantages de l'invention apparaîtront à la lecture de la description nullement limitative qui suit et des figures annexées qui illustrent de manière schématique le panneau d'atténuation acoustique selon l'invention.

### Brève description des dessins

[Fig. 1] La figure 1 est une représentation schématique d'un panneau d'atténuation acoustique de l'art antérieur
[Fig. 2] La figure 2 est une représentation schématique en coupe transversale d'un panneau acoustique selon un mode de réalisation de l'invention.
[Fig. 3] La figure 3 est une vue agrandie de cellules superposées d'un panneau acoustique selon un mode de réalisation de l'invention.
[Fig. 4] La figure 4 est une en vue du dessus d'un panneau acoustique selon un mode de réalisation de l'invention.
[Fig. 5] La figure 5 est une représentation graphique illustrant la différence des plages de fréquences traitées entre le panneau acoustique selon l'invention et les panneaux acoustiques de l'art antérieur.
[Fig. 6] La figure 6 est une représentation graphique illustrant l'équivalence des résultats d'atténuation acoustique obtenus avec un panneau acoustique selon l'invention et un panneau acoustique de hauteur totale de 50mm.
[Fig. 7] La figure 7 est un tableau recensant les résultats obtenus en faisant varier différents paramètres du panneau acoustique selon l'invention.
[Fig. 8] La figure 8 est une illustration d'un ensemble propulsif comprenant une nacelle dont l'entrée d'air reçoit un panneau d'atténuation acoustique selon l'invention.

### Description des modes de réalisation

Par souci de simplification, les éléments identiques sont repérés par des signes de référence identiques sur l'ensemble des figures.

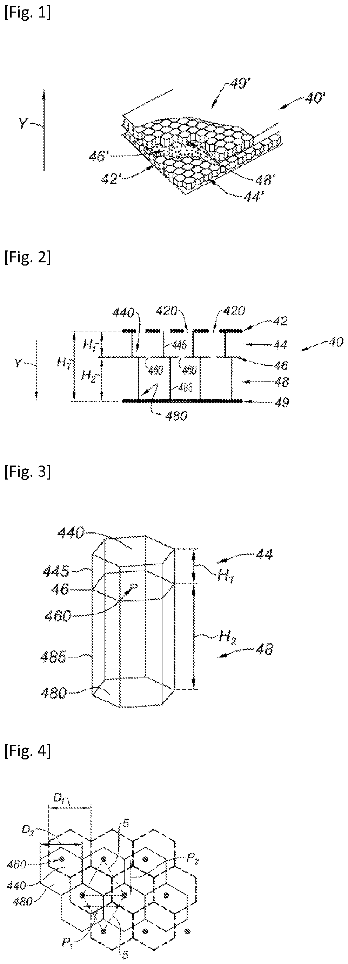

La figure 1 est une vue partielle d'un panneau d'atténuation acoustique connu de l'art antérieur, notamment de la demande FR2841031

Le panneau acoustique 40' est dans cet exemple à double résonateur c'est-à-dire qu'il comprend deux épaisseurs de cellules acoustiques et présente une structure stratifiée comportant successivement suivant le sens de l'axe Y une paroi acoustique perforée 42', une première structure alvéolaire 44', un septum 46' micro perforé, une deuxième structure alvéolaire 48' et une peau pleine 49' agencée sur la deuxième structure alvéolaire 48'.

La paroi acoustique perforée 42' est destinée à être au contact de l'air circulant et est traversée par une pluralité de macro-perforations (non visibles) par lesquelles les ondes acoustiques peuvent pénétrer.

La première structure alvéolaire et la deuxième structure alvéolaire 44', 48' comportent chacune des cellules acoustiques séparées les unes des autres par des cloisons périphériques.

Le septum 46' est disposé entre la première 44' et la deuxième 46' structure alvéolaire. Le septum micro-perforé des panneaux actuels est traversé par une pluralité de micro-perforations dont le diamètre est classiquement de l'ordre de 0,3 mm avec une densité de perforation de l'ordre de 400 000 à 800 000 trous/m2.

Les panneaux acoustiques à double résonateurs et à septum micro-perforé permettent de réaliser une atténuation d'ondes acoustiques à moyennes et hautes fréquences c'est-à-dire supérieure à 1500 Hz.

La figure 2 est une représentation schématique en coupe transversale d'un panneau acoustique selon un premier mode de réalisation de l'invention.

Le panneau d'atténuation acoustique 40 est un panneau acoustique de type double résonateur comprenant successivement suivant le sens de l'axe Y une paroi acoustique perforée 42, une première structure alvéolaire 44, un septum 46 macro perforé, une deuxième structure alvéolaire 48 et une paroi pleine 49 dite paroi réflectrice, démunie de perforation.

En effet, l'utilisation d'un panneau acoustique à structure alvéolaire unique ne permet pas d'obtenir un taux de surface ouvert suffisant pour un traitement acoustique optimal.

La paroi acoustique perforée 42 présente une pluralité de macro- perforations 420 formées de manière régulière dans la paroi acoustique 42. Chaque perforation 420 présente un diamètre de l'ordre de 1,5 mm avec une densité de perforation de l'ordre de 40 000 à 100 000 trous/m2.

La paroi acoustique perforée présente un taux d'ouverture compris entre 8% et 20 % par rapport à la surface totale de la paroi.

La première structure alvéolaire 44 présente une pluralité de cellules acoustiques 440 délimitées par des cloisons périphériques 445. La deuxième structure alvéolaire 48 présente une pluralité de cellules acoustiques 480 délimitées par des cloisons périphériques 485.

La première structure alvéolaire 44 est superposée sur la deuxième structure alvéolaire 48. La première structure alvéolaire 44 est désalignée par rapport à la deuxième structure alvéolaire 48 c'est-à-dire que les cloisons périphériques 445 de la première structure alvéolaire 44 ne sont pas de continuité géométrique avec les cloisons périphériques 485 de la deuxième structure alvéolaire 48.

La première structure alvéolaire est directement reliée à la paroi acoustique perforée 42 par exemple par collage.

La deuxième structure alvéolaire est reliée à la paroi pleine 49 par exemple par collage.

Les cellules acoustiques 440 de la première structure alvéolaire 44 s'étendent selon l'axe Y et présentent une hauteur H1 comprise entre 5 et 10 mm. La hauteur des cellules acoustiques 440 de la première structure alvéolaire 44 doit être au moins égale à 5mm pour éviter des phénomènes de couplage.

Par hauteur on entend la côte qui sépare les faces d'une structure alvéolaire.

Les cellules acoustiques 480 de la deuxième structure alvéolaire 48 s'étendent selon l'axe Y et présentent une hauteur H2 comprise entre 10 et 20 mm.

Le principe selon l'invention est que la hauteur H1 des cellules acoustiques 440 de la première structure alvéolaire 44 en contact direct avec la paroi acoustique perforée 42 soit inférieure à la hauteur H2 des cellules acoustiques 480 de la deuxième structure alvéolaire 48. Le but étant de faire résonner le volume des cellules acoustiques 480 la deuxième structure alvéolaire 48.

Dans un mode de réalisation non représenté, la hauteur des cellules acoustiques 440 de la première structure alvéolaire 44 est égale à la hauteur des cellules acoustiques 480 de la deuxième structure alvéolaire 48.

Dans un souci de restriction de l'encombrement, la hauteur totale HT du panneau d'atténuation acoustique 40 est inférieure ou égale à 30 mm, de préférence la hauteur totale HT est inférieure à 25 mm.

La hauteur totale du panneau prend en compte tous les éléments constituant ledit panneau acoustique.

La première structure alvéolaire 44 et la deuxième structure alvéolaire 44 sont séparées l'une de l'autre par le septum 46. Le septum 46 est interposé entre ladite première structure alvéolaire 44 et ladite deuxième structure alvéolaire 48. Le septum 46 s'étend sur toute la surface entre les deux structures alvéolaires, selon une direction perpendiculaire à l'axe Y.

Le septum 46 se distingue de celui de l'art antérieur en ce qu'il n'est pas micro-perforé mais macro-perforé, c'est-à-dire qu'il présente une pluralité de perforations 460 présentant un diamètre supérieur ou égal à 1 mm. De préférence le diamètre des macro-perforations 460 du septum 46 est compris entre 1 et 2 mm.

Chaque cellule acoustique 440 de la première structure alvéolaire et chaque cellule acoustique 480 de ladite au moins deuxième structure alvéolaire 48 est disposée en regard d'une perforation unique 460 du septum 46. C'est-à-dire que chaque cellule acoustique est disposée en regard d'une seule macro-perforation du septum 46.

Le principe est de définir le motif de perçage du septum c'est-à-dire la distance entre les macro-perforations de manière à ce que globalement, la majorité de la surface du septum présente une perforation unique par cellule acoustique dans chaque structure alvéolaire (figure 4). Il est à noter que lors de la production industrielle il peut se produire marginalement des effets de bord selon lesquelles une cloison périphérique d'une structure alvéolaire peut se trouver positionnée au niveau d'une perforation. Dans ces cas marginaux on aura potentiellement une demi perforation par cellule ou une perforation entière et une demi perforation à une extrémité de la cellule. Cela ne remet pas en cause l'efficacité du panneau qui lui est conféré par le fait qu'une majorité des macro-perforations sont agencées de manière unique en regard de chacune des cellules acoustiques de la première structure alvéolaire t de la deuxième structure alvéolaire.

Les inventeurs se sont aperçu de manière surprenante que les macro perforations 460 du septum 46 permettait d'obtenir un comportement d'atténuation acoustique sur les basses fréquences, sans nécessité une augmentation de la hauteur des cellules acoustiques. Les macro-perforations 460 du septum 46 permettent de forcer le volume complet de la deuxième structure alvéolaire 48 à résonner sur sa hauteur H2, permettant ainsi un traitement acoustique optimale des ondes basses fréquences.

Le septum 46 peut être par exemple en composite organique comportant de une à trois couches de tissus de fibre de verre noyés dans une résine époxyde durcie par polymérisation.

La figure 3 est une vue agrandie d'une coupe partielle du panneau acoustique selon un mode de réalisation de l'invention. Chaque cellule acoustique présente une forme hexagonale.

Dans ce mode de réalisation la première structure alvéolaire 44 est superposée sur la deuxième structure alvéolaire 48 de sorte que les cloisons périphériques 445 des cellules de la première structure alvéolaire sont agencées dans la continuité géométrique des cloisons périphériques 45 des cellules de la deuxième structure alvéolaire 48.

Chaque cellule acoustique 440 de la première structure alvéolaire 44 est agencée en regard d'une cellule acoustique 480 de la deuxième structure alvéolaire 48.

Le septum 46 est situé entre la cellule acoustique 440 de la première structure alvéolaire 44 et la cellule acoustique 480 de la deuxième structure alvéolaire 48.

Le septum présente une macro-perforation 46 circulaire unique disposée en regard de la cellule acoustique 440 de la première structure alvéolaire 44 et de la cellule acoustique 480 de la deuxième structure alvéolaire 48. Ainsi, chaque cellule acoustique 440 de la première structure alvéolaire 40 et chaque cellule 480 de la deuxième structure alvéolaire est centrée par rapport à la perforation unique 460 du septum 46

Dans le présent exemple, la hauteur H1 de la cellule acoustique 440 de la première structure alvéolaire 44 est inférieure à la hauteur H2 de la cellule acoustique 480 de la deuxième structure alvéolaire 48.

La figure 4 est une vue partielle en couple longitudinale du panneau d'atténuation acoustique selon un mode de réalisation de l'invention.

La figure 4 illustre la définition du motif de perçage du septum 46 c'est-à-dire la définition de la distance entre chacune des macro perforations 460 dans le septum 46.

La définition du motif de perçage est définie de sorte à obtenir une unique macro-perforation 460 en regard de chaque cellule acoustique de chaque structure alvéolaire.

Cette figure illustre en premier plan la première structure alvéolaire 44 comprenant la pluralité de cellules acoustiques 440, la deuxième structure alvéolaire 48 comprenant la pluralité de cellules acoustiques 480 en arrière-plan ainsi que les macro-perforations 460 du septum disposé entre la première structure alvéolaire 44 et la deuxième structure alvéolaire 48.

Dans le présent exemple, le diamètre D1 des cellules acoustiques 440 de la première structure alvéolaire 44 est égale au diamètre D2 des cellules acoustiques 480 de la deuxième structure alvéolaire 48.

Pour obtenir une macro-perforation 460 unique en regard de chacune des cellules acoustiques 440, 480, le pas de perçage dans le septum 46 doit être de l'ordre du diamètre D1, D2 des cellules acoustiques 440, 480 en prenant en compte les tolérances. Le diamètre D1, D2 est défini comme étant le diamètre du cercle inscrit à l'hexagone d'une cellule acoustique.

Le pas de perçage P1 du septum 46 dans la longueur du panneau est défini par la règle générale : D +/- 20%. Avec D correspondant au diamètre D1, D2 des cellules acoustiques 440, 480.

Le pas de perçage P2 du septum 46 dans la largeur du panneau est défini par la règle générale : (D x 0,86) +/- 20%. Avec D correspondant au diamètre D1, D2 des cellules acoustiques 440, 480.

Les macro-perforations 460 sont ainsi réparties régulièrement dans le septum de sorte que trois macro-perforations 360 adjacentes forment un triangle équilatéral 5 dont un côté P1 est égal au diamètre D1, D2 des cellules acoustiques 440, 480 de la première structure alvéolaire 44 et de la deuxième structure alvéolaire 48 et dont une hauteur P2 est égale à 0.86 fois le diamètre D1, D2 des cellules acoustiques 440, 480 de la première structure alvéolaire 44 et de la deuxième structure alvéolaire 48 +/-20%.

Ainsi par exemple, en utilisant des structures alvéolaires aux dimensions 3/8" connus de l'homme du métier, pour lequel les cellules acoustiques présentent un diamètre D1, D2 égale à 9,52 mm, le pas de perçage P1 du septum 46 dans la longueur doit être défini à 9,5 mm et le pas de perçage P2 du septum dans la largeur du panneau acoustique doit être défini à 8,3 mm.

Ceci permet d'obtenir une perforation 460 unique du septum en 46 regard de chaque cellule acoustique 440, 480 des structures alvéolaires de sorte que l'atténuation acoustique soit améliorée et optimisée

L'invention ne se limite pas à ces types de structures alvéolaires, l'homme du métier pourra utiliser des structures alvéolaires aux dimensions plus grandes ou plus petites.

Selon un mode de réalisation non représenté et ne faisant pas partie de la présente invention revendiquée, le diamètre D2 des cellules acoustiques 480 de la deuxième structure alvéolaire 48 peut être supérieur au diamètre D1 des cellules acoustiques 44 de la première structure alvéolaire 44. Ce mode de réalisation permet de bénéficier en plus d'un effet volume et d'obtenir des résultats d'atténuation acoustique équivalent en réduisant la hauteur H2 des cellules acoustiques de la deuxième structure alvéolaire 48 et donc un gain d'encombrement supérieur.

Dans ce mode de réalisation, le pas de perçage sera défini en fonction du diamètre D2 des cellules acoustiques 480 de la deuxième structure alvéolaire 48, c'est-à-dire en fonction du diamètre des cellules le plus grand.

Les macro-perforations 460 sont ainsi réparties régulièrement dans le septum de sorte que trois macro-perforations 460 adjacentes forment un triangle équilatéral 5 dont un côté P1 est égal au diamètre des cellules acoustiques 480 de la deuxième structure alvéolaire 48 et une hauteur P2 est égale à 0.86 fois le diamètre des cellules acoustiques 480 de la deuxième structure alvéolaire 48 +/-20%.

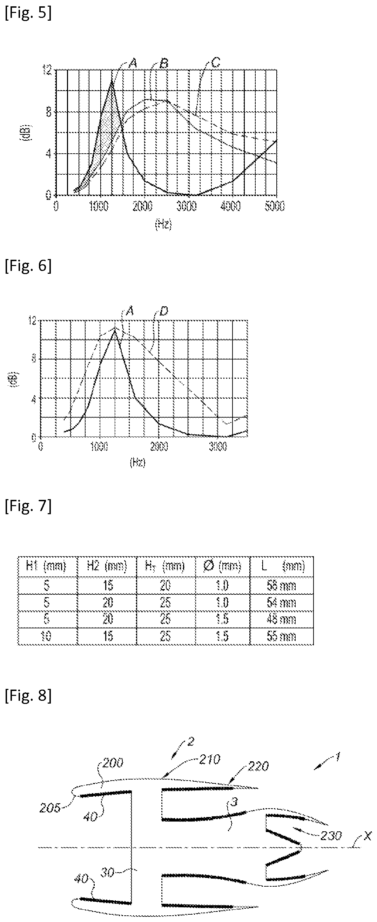

La figure 5 est un graphique comparatif des résultats d'atténuation acoustique obtenus entre le panneau acoustique selon l'invention et les panneaux acoustiques de l'art antérieur.

La courbe A illustre le résultat d'atténuation acoustique obtenu avec le panneau d'atténuation acoustique selon l'invention dans lequel la hauteur H1 des cellules acoustiques 440 de la première structure alvéolaire 44 est égale à 5 mm, la hauteur H2 des cellules acoustiques 480 de la deuxième structure alvéolaire 48 est égale à 15 mm et le diamètre des macro-perforations 460 du septum 46 est égal à 1mm.

La courbe B illustre le résultat d'atténuation acoustique obtenu avec un panneau acoustique de l'art antérieur présentant une structure alvéolaire unique dit « Single Degree of Freedom » et présentant une hauteur totale de 20mm.

La courbe C illustre le résultat d'atténuation acoustique obtenu avec un panneau acoustique de l'art antérieur présentant deux structures alvéolaires séparées par un septum micro-perforé dit « Double Degree of Freedom » et présentant une hauteur totale de 20mm.

Comme l'illustre le graphique, les panneaux acoustiques de l'art antérieur présentent permettent de fournir des traitements acoustiques satisfaisant dans les moyennes à hautes fréquences. Par ailleurs les panneaux dits « Double Degree of Freedom » à septum micro-perforé permettent d'élargir l'atténuation acoustiques vers les hautes fréquences par rapport à un panneau dit « Single Degree of Freedom » de même hauteur totale.

Le panneau acoustique selon l'invention permet quant à lui de réaliser une atténuation acoustique des ondes basses fréquences caractéristiques des nouveaux ensembles propulsifs, pour un même encombrement.

La figure 6 est une représentation graphique qui illustre les résultats d'atténuation acoustique obtenus avec un panneau acoustique selon l'invention et un panneau acoustique présentant une hauteur totale de 50mm.

La courbe A représente l'atténuation acoustique obtenue avec un panneau acoustique selon l'invention dans lequel les cellules acoustiques 440 de la première structure alvéolaire 44 présentent une hauteur H1 égale à 5 mm, les cellules acoustiques 480 de la deuxième structure alvéolaire 48 présentent une hauteur H2 égale à 15 mm, et dont les macro-perforations 460 du septum 46 présentent un diamètre de 1 mm.

La courbe D représente l'atténuation acoustique obtenue avec un panneau acoustique présentant une structure alévolaire unique dit « Single degree of Freedom » et dont la hauteur totale est de 50 mm.

La courbe D permet d'illustrer la théorie selon laquelle l'augmentation des dimensions des cellules permet de fournir un traitement des ondes dans les basses fréquences.

La courbe A démontre que le panneau acoustique selon l'invention permet d'obtenir une atténuation acoustique optimale des ondes basses fréquences avec un gain d'encombrement de 60% par rapport au panneau acoustique de hauteur totale égale à 50 mm.

Le panneau d'atténuation acoustique selon l'invention permet d'obtenir un traitement acoustique optimal des ondes basses fréquences sur une plage de fréquence plus sélective.

La figure 7 est un tableau qui illustre l'équivalence de longueur acoustique obtenue avec les panneaux acoustiques selon l'invention pour lesquels on a fait varier différents paramètres.

Les paramètres testés sont la hauteur H1 des cellules acoustiques 440 de la première structure alvéolaire, la hauteur H2 des cellules acoustiques 480 de la deuxième structure alvéolaire et le diamètre des macro- perforations 460 du septum 46.

Les colonnes présentent de gauche à droite : la hauteur H1 des cellules acoustiques 440 de la première structure alvéolaire 44, la hauteur H2 des cellules acoustiques 480 de la deuxième structure alvéolaire 48, la hauteur totale du panneau d'atténuation acoustique selon l'invention, le diamètre de la macro- perforation du septum 46 et l'équivalence de la longueur d'onde.

Les paramètres de la hauteur H1 des cellules acoustiques de la première structure alvéolaire ont été testés entre 5 et 10 mm. Les paramètres de la hauteur H2 des cellules acoustiques de la deuxième structure alvéolaire ont été testés entre 15 et 20 mm de sorte que la hauteur totale des panneaux acoustique de l'invention soit toujours inférieure à 30 mm. Le diamètre de la macro- perforation du septum 46 a été testée entre 1 et 1,5 mm.

Les résultats obtenus démontrent l'obtention de longueurs acoustiques équivalentes à celles obtenues avec des panneaux acoustiques présentant une hauteur totale de l'ordre de 50mm. Les panneaux acoustiques selon l'invention permettent d'obtenir des longueurs acoustiques significativement supérieure à leur hauteur totale.

Pour réduire l'encombrement au maximum, le principe est de choisir la hauteur H2 des cellules acoustiques 480 de la deuxième structure alvéolaire 48 ainsi que le diamètre de la macro-perforation fonction de la fréquence ciblée puis réduire la hauteur H1 des cellules acoustiques 440 de la première structure alvéolaire 44 au maximum.

La figure 8 est une illustration d'un ensemble propulsif 1 s'étendant selon un axe longitudinal X comprenant une nacelle courte 2 et un turboréacteur 3. La nacelle 2 présente une structure comprenant une section amont formant une entrée d'air 200, une section médiane 210 comprenant des capots de soufflante destinés à entourer une soufflante 30 du turboréacteur 3, une section avale 220 comprenant un inverseur de poussée et destinée à entourer la chambre de combustion du turboréacteur et une tuyère d'éjection 230.

L'entrée d'air 200 comprend une face intérieure 205 orientée en regard de la soufflante 30, ladite face intérieure reçoit au moins un panneau d'atténuation acoustique selon l'invention.

Comme l'illustre la figure 8, d'autres composants de la nacelle tel que l'inverseur de poussée par exemple, peuvent recevoir le panneau d'atténuation acoustique selon l'invention.

Ainsi grâce au panneau acoustique selon l'invention, il est possible de fournir un traitement acoustique basse fréquence à performance acoustique équivalente au traitement acoustique obtenus avec des panneaux acoustiques de hauteur totale de l'ordre de 50 mm, avec un gain d'encombrement de l'ordre de 60% par rapport à ces derniers.

Bien évidemment, l'invention n'est pas limitée aux exemples qui viennent d'être décrits et de nombreux aménagements peuvent être apportés à ces exemples sans sortir du cadre de l'invention, par exemple, le panneau d'atténuation acoustique pourrait présenter plus de deux structures alvéolaires disposées l'une sur l'autre. En outre, les différentes caractéristiques, formes, variantes et modes de réalisation de l'invention peuvent être associés les uns avec les autres selon diverses combinaisons dans la mesure où ils ne sont pas incompatibles ou exclusifs les uns des autres. En particulier, toutes les variantes et modes de réalisation décrits précédemment sont combinables entre eux. L'invention est définie par les revendications annexées.

## Revendications

1. Panneau d'atténuation acoustique (40) comprenant :
- une paroi acoustique perforée (42),
- une première structure alvéolaire (44) reliée à la paroi perforée (42), présentant une pluralité de cellules acoustiques (440) délimitées par des cloisons périphériques (445),
- une deuxième structure alvéolaire (48) présentant une pluralité de cellules acoustiques (480) délimitées par des cloisons périphériques (485),
- un septum (46) présentant une pluralité de macro-perforations (460), interposé entre ladite première structure alvéolaire (44) et ladite deuxième structure alvéolaire (48),
chaque cellule acoustique (440) de la première structure alvéolaire et chaque cellule acoustique (480) de ladite au moins deuxième structure alvéolaire (48) étant disposée en regard d'une perforation unique (460) du septum (46), chaque cellule acoustique présentant une forme hexagonale,
**caractérisé en ce que** les macro-perforations (460) sont réparties régulièrement dans le septum (46) de sorte que trois macro-perforations (360) adjacentes forment un triangle équilatéral (5) dont un côté (P1) est égal au diamètre (D1, D2) des cellules acoustiques (440, 480) des structures alvéolaires (44, 48) et une hauteur (P2) est égale à 0.86 fois le diamètre des cellules acoustiques (440, 480) des structures alvéolaires (44, 48) +/-20%, le diamètre (D1, D2) étant défini comme étant le diamètre du cercle inscrit à l'hexagone d'une cellule acoustique, le diamètre (D1) des cellules acoustiques (440) de la première structure alvéolaire (44) est égal au diamètre (D2) des cellules acoustiques (480) de la deuxième structure alvéolaire (48).

2. Panneau d'atténuation acoustique (40) selon la revendication précédente, **caractérisé en ce que** chaque perforation (460) du septum (46) présente un diamètre compris entre 1 mm et de 2 mm.

3. Panneau d'atténuation acoustique (40) selon l'une quelconque des revendications précédentes, **caractérisé en ce que** chaque cellule acoustique 440 de la première structure alvéolaire (44) présente une hauteur (H1) comprise entre 5 mm et 10 mm.

4. Panneau d'atténuation acoustique (40) selon l'une quelconque des revendications précédentes, **caractérisé en ce que** chaque cellule acoustique (480) de la deuxième structure alvéolaire (48) présente une hauteur (H2) comprise entre 10 mm et 20 mm.

5. Panneau d'atténuation acoustique (40) selon l'une quelconque des revendications précédentes, **caractérisé en ce que** la hauteur (H1) des cellules acoustiques (440) de la première structure alvéolaire (44) est inférieure à la hauteur (H2) des cellules acoustiques (480) de la deuxième structure alvéolaire (48).

6. Panneau d'atténuation acoustique (40) selon l'une des revendication 1 à 4, **caractérisé en ce que** la hauteur (H1) des cellules acoustiques (440) de la première structure alvéolaire (44) est égale à la hauteur (H2) des cellules acoustiques (480) de la deuxième structure alvéolaire (48).

7. Panneau d'atténuation acoustique (40) selon l'une quelconque des revendications précédentes, **caractérisé en ce que** le panneau acoustique présente une hauteur totale (H_{T)} inférieure à 30 mm.

8. Panneau d'atténuation acoustique (40) selon l'une des revendications 1 à 7 **caractérisé en ce que** la première structure alvéolaire est superposée sur la deuxième structure alvéolaire de sorte que les cloisons périphériques (445) des cellules (440) de la première structure alvéolaire (40) sont agencées dans la continuité géométrique des cloisons périphériques (485) des cellules (480) de la deuxième structure alvéolaire (48).

9. Panneau d'atténuation acoustique (40) selon la revendication précédente **caractérisé en ce que** chaque cellule de la première structure alvéolaire (40) et chaque cellule (480) de la deuxième structure alvéolaire est centrée par rapport à la perforation unique (460) du septum (46).

10. Nacelle (2) dans laquelle est disposée une soufflante (30), la nacelle comprenant une entrée d'air (200) comportant une face intérieure orientée en regard de la soufflante (30), ladite face intérieure recevant au moins un panneau d'atténuation acoustique (40) selon l'une des revendications 1 à 9.

11. Nacelle selon la revendication précédente dans laquelle la nacelle comprend une entrée d'air (200), un inverseur de poussée (220) et une tuyère d'éjection (230) dans laquelle au moins l'un des composants choisi dans le groupe comprenant l'entrée d'air (200), l'inverseur de poussée (220) et la tuyère d'éjection (230) reçoit un panneau d'atténuation acoustique (40) selon l'une des revendications 1 à 9.

## Patentansprüche

1. Akustische Dämpfungsplatte (40), die Folgendes umfasst:
- eine perforierte Akustikwand (42),
- eine erste Wabenstruktur (44), die mit der perforierten Wand (42) verbunden ist und eine Vielzahl von akustischen Zellen (440) aufweist, die durch periphere Trennwände (445) begrenzt sind,
- eine zweite Wabenstruktur (48), die eine Vielzahl von akustischen Zellen (480) aufweist, die durch periphere Trennwände (485) begrenzt sind,
- eine Scheidewand (46), die eine Vielzahl von Makroperforationen (460) aufweist, die zwischen der ersten Wabenstruktur (44) und der zweiten Wabenstruktur (48) eingefügt sind,
wobei jede akustische Zelle (440) der ersten Wabenstruktur und jede akustische Zelle (480) der mindestens zweiten Wabenstruktur (48) gegenüber einer einzelnen Perforation (460) der Scheidewand (46) angeordnet sind, wobei jede akustische Zelle eine sechseckige Form aufweist,
**dadurch gekennzeichnet, dass** die Makroperforationen (460) derart gleichmäßig in der Scheidewand (46) verteilt sind, dass drei benachbarte Makroperforationen (360) ein gleichseitiges Dreieck (5) bilden, dessen eine Seite (P1) gleich einem Durchmesser (D1, D2) der akustischen Zellen (440, 480) der Wabenstrukturen (44, 48) ist und dessen eine Höhe (P2) gleich dem 0,86-Fachen des Durchmessers der akustischen Zellen (440, 480) der Wabenstrukturen (44, 48) +/-20 % ist, wobei der Durchmesser (D1, D2) wie der Durchmesser des Kreises, der sich innerhalb des Sechsecks einer akustischen Zelle befindet, definiert ist, wobei der Durchmesser (D1) der akustischen Zellen (440) der ersten Wabenstruktur (44) gleich dem Durchmesser (D2) der akustischen Zellen (480) der zweiten Wabenstruktur (48) ist.

2. Akustische Dämpfungsplatte (40) nach dem vorhergehenden Anspruch, **dadurch gekennzeichnet, dass** jede Perforation (460) der Scheidewand (46) einen Durchmesser zwischen 1 mm und 2 mm aufweist.

3. Akustische Dämpfungsplatte (40) nach einem der vorhergehenden Ansprüche, **dadurch gekennzeichnet, dass** jede akustische Zelle (440) der ersten Wabenstruktur (44) eine Höhe (H1) zwischen 5 mm und 10 mm aufweist.

4. Akustische Dämpfungsplatte (40) nach einem der vorhergehenden Ansprüche, **dadurch gekennzeichnet, dass** jede akustische Zelle (480) der zweiten Wabenstruktur (48) eine Höhe (H2) zwischen 10 mm und 20 mm aufweist.

5. Akustische Dämpfungsplatte (40) nach einem der vorhergehenden Ansprüche, **dadurch gekennzeichnet, dass** die Höhe (H1) der akustischen Zellen (440) der ersten Wabenstruktur (44) kleiner ist als die Höhe (H2) der akustischen Zellen (480) der zweiten Wabenstruktur (48).

6. Akustische Dämpfungsplatte (40) nach einem der Ansprüche 1 bis 4, **dadurch gekennzeichnet, dass** die Höhe (H1) der akustischen Zellen (440) der ersten Wabenstruktur (44) gleich der Höhe (H2) der akustischen Zellen (480) der zweiten Wabenstruktur (48) ist.

7. Akustische Dämpfungsplatte (40) nach einem der vorhergehenden Ansprüche, **dadurch gekennzeichnet, dass** die akustische Dämpfungsplatte eine Gesamthöhe (H_{T}) von weniger als 30 mm aufweist.

8. Akustische Dämpfungsplatte (40) nach einem der Ansprüche 1 bis 7, **dadurch gekennzeichnet, dass** die erste Wabenstruktur derart über die zweite Wabenstruktur gelagert ist, dass die peripheren Trennwände (445) der Zellen (440) der ersten Wabenstruktur (40) in der geometrischen Kontinuität der peripheren Trennwände (485) der Zellen (480) der zweiten Wabenstruktur (48) angeordnet sind.

9. Akustische Dämpfungsplatte (40) nach dem vorhergehenden Anspruch, **dadurch gekennzeichnet, dass** jede Zelle der ersten Wabenstruktur (40) und jede Zelle (480) der zweiten Wabenstruktur in Bezug auf die einzelne Perforation (460) der Scheidewand (46) zentriert ist.

10. Gondel (2), in der ein Gebläse (30) angeordnet ist, wobei die Gondel einen Lufteinlass (200) umfasst, der eine dem Gebläse (30) gegenüberliegende Innenfläche umfasst, wobei die Innenfläche mindestens eine akustische Dämpfungsplatte (40) nach einem der Ansprüche 1 bis 9 aufnimmt.

11. Gondel nach dem vorhergehenden Anspruch, wobei die Gondel einen Lufteinlass (200), einen Schubumkehrer (220) und eine Schubdüse (230) umfasst, wobei mindestens eine der Komponenten, die aus der Gruppe, die den Lufteinlass (200), den Schubumkehrer (220) und Schubdüse (230) umfasst, ausgewählt wird, eine akustische Dämpfungsplatte (40) nach einem der Ansprüche 1 bis 9 aufnimmt.

## Claims

1. An acoustic attenuation panel (40) comprising:
- a perforated acoustic wall (42),
- a first alveolar structure (44) connected to the perforated wall (42), having a plurality of acoustic cells (440) delimited by peripheral partitions (445),
- a second alveolar structure (48) having a plurality of acoustic cells (480) delimited by peripheral partitions (485),
- a septum (46) having a plurality of macro-perforations (460), interposed between said first alveolar structure (44) and said second alveolar structure (48),
each acoustic cell (440) of the first alveolar structure and each acoustic cell (480) of said at least second alveolar structure (48) being disposed opposite a single perforation (460) of the septum (46), each acoustic cell having a hexagonal shape,
**characterized in that** the macro-perforations (460) are regularly distributed in the septum (46) so that three adjacent macro-perforations (360) form an equilateral triangle (5), one side (P1) of which is equal to the diameter (D1, D2) of the acoustic cells (440, 480) of the alveolar structures (44, 48) and one height (P2) of which is equal to 0.86 times the diameter of the acoustic cells (440, 480) of the alveolar structures (44, 48) +/- 20%, the diameter (D1, D2) being defined as the diameter of the circle inscribed in the hexagon of an acoustic cell, the diameter (D1) of the acoustic cells (440) of the first alveolar structure (44) is equal to the diameter (D2) of the acoustic cells (480) of the second alveolar structure (48).

2. The acoustic attenuation panel (40) according to the preceding claim, **characterized in that** each perforation (460) of the septum (46) has a diameter comprised between 1 mm and 2 mm.

3. The acoustic attenuation panel (40) according to any one of the preceding claims, **characterized in that** each acoustic cell (440) of the first alveolar structure (44) has a height (H1) comprised between 5 mm and 10 mm.

4. The acoustic attenuation panel (40) according to any one of the preceding claims, **characterized in that** each acoustic cell (480) of the second alveolar structure (48) has a height (H2) comprised between 10 mm and 20 mm.

5. The acoustic attenuation panel (40) according to any one of the preceding claims, **characterized in that** the height (H1) of the acoustic cells (440) of the first alveolar structure (44) is lower than the height (H2) of the acoustic cells (480) of the second alveolar structure (48).

6. The acoustic attenuation panel (40) according to any of claims 1 to 4, **characterized in that** the height (H1) of the acoustic cells (440) of the first alveolar structure (44) is equal to the height (H2) of the acoustic cells (480) of the second alveolar structure (48).

7. The acoustic attenuation panel (40) according to any one of the preceding claims, **characterized in that** the acoustic panel has a total height (H_{T}) lower than 30 mm.

8. The acoustic attenuation panel (40) according to any of claims 1 to 7 **characterized in that** the first alveolar structure is superimposed on the second alveolar structure so that the peripheral partitions (445) of the cells (440) of the first alveolar structure (40) are arranged in geometric continuity with the peripheral partitions (485) of the cells (480) of the second alveolar structure (48).

9. The acoustic attenuation panel (40) according to the preceding claim **characterized in that** each cell of the first alveolar structure (40) and each cell (480) of the second alveolar structure are centered with respect to the single perforation (460) of the septum (46).

10. A nacelle (2) in which a fan (30) is disposed, the nacelle comprising an air inlet (200) including an inner face oriented opposite the fan (30), said inner face receiving at least one acoustic attenuation panel (40) according to any of claims 1 to 9.

11. The nacelle according to the preceding claim wherein the nacelle comprises an air inlet (200), a thrust reverser (220) and an ejection nozzle (230) in which at least one of the components selected from the group comprising the air inlet (200), the thrust reverser (220) and the ejection nozzle (230) receives an acoustic attenuation panel (40) according to any of claims 1 to 9.
